(19) Europäisches Patentamt / European Patent Office / Office européen des brevets

(11) **EP 4 438 339 B1**

(12) **EUROPEAN PATENT SPECIFICATION**

(45) Date of publication and mention
of the grant of the patent:
**27.05.2026 Bulletin 2026/22**

(21) Application number: **23166006.9**

(22) Date of filing: **31.03.2023**

(51) International Patent Classification (IPC):
***B60C 11/03*** *(2006.01)*  ***B60C 11/11*** *(2006.01)*
***B60C 11/13*** *(2006.01)*  ***B60C 11/12*** *(2006.01)*

(52) Cooperative Patent Classification (CPC):
**B60C 11/0302; B60C 11/11; B60C 11/12;
B60C 11/1218; B60C 11/1392;** B60C 2011/0313;
B60C 2011/0337; B60C 2011/0344;
B60C 2011/0346; B60C 2011/0358;
B60C 2011/0374; B60C 2011/1361

(54) **TIRE HAVING AN IMPROVED TREAD PATTERN**

REIFEN MIT VERBESSERTEM LAUFFLÄCHENPROFIL

PNEUMATIQUE AYANT UN MOTIF DE BANDE DE ROULEMENT AMÉLIORÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**02.10.2024 Bulletin 2024/40**

(73) Proprietor: **Bridgestone Europe NV/SA
1930 Zaventem (BE)**

(72) Inventors:
• **PISCOPO, Guido
00128 Rome (IT)**

• **RODRIQUEZ, Giuseppe
00128 Rome (IT)**

(74) Representative: **Bardehle Pagenberg
Partnerschaft mbB
Patentanwälte Rechtsanwälte
Prinzregentenplatz 7
81675 München (DE)**

(56) References cited:
**WO-A1-2021/089964    US-A1- 2017 136 830
US-A1- 2019 255 890    US-B2- 10 967 684**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# Description

## Field of the invention

The present invention relates to a vehicle tire. One possible application of the disclosed tire relates to an all-season tire intended to equip a passenger vehicle or commercial van vehicles. The disclosure can also be applied to other tires, for example winter tires, summer tires or tires for off the road applications.

## Background

All-season tires - which are used here as a typical example to facilitate readability - are known for providing good grip on snow covered road surfaces while also providing good performance on dry and wet road surfaces. Such tires are intended for use throughout the year, such that changing between summer and winter tires is no longer necessary.

For example, all-season tires are known that comprise grooves that extend from a center of the tire's tread, i.e., from the equatorial plane of the tire, towards a shoulder (sometimes also referred to as "shoulder portion" or "side portion") of the tire. These grooves, which typically extend in substantial axial direction, are configured to deliver water from a contact patch of the tire with the road outwards to provide contact between tire blocks and the road surface. Contact between blocks and the road is necessary to provide friction which provides for lateral road holding and further allows a driver to control the movement of the vehicle by accelerating, breaking and/or steering.

Furthermore, all-season tires are known which comprise sipes to enhance traction on snow-covered grounds. However, sipes reduce the stiffness of the blocks, which impairs the tire's breaking performance on dry grounds.

Moreover, tread blocks often change in width, either among individual blocks which may have a different width in different portions, or over the circumference of the tire, where various blocks of different width may be provided. This variation of block width leads to an unbalanced distribution of block stiffness over the tread, which leads to unevenness in the distribution of wear energy, as well as in the distribution of contact pressure, leading to a worsening of the tire performance.

US patent application US 2019/0255890 A1 discloses a first block in a shape of having a projected section that extends in a tire circumferential direction and a second block in a different shape from the first block are alternately aligned in the tire circumferential direction to form a block row, that two of the block rows are famed, and that the two second blocks are arranged on both sides in a tire width direction of the projected section of the first block.

US patent application US 2017/0136830 A1 discloses a pneumatic tire including blocks formed by a main groove and a lateral groove on a tread portion. At least one block includes at least two sipes which divide the block into three or more sections in the tire circumferential direction.

Us patent US 10,967,684 B2 relates to a including a tread portion including a first land portion defined between circumferentially extending first and second edges. The first land portion is provided with first and second lateral grooves respectively extending from the first and second edges and terminating within the first land portion and a circumferentially extending first longitudinal narrow groove in communication with the first and second lateral grooves.

Internation application WO 2021/089964 A1 relates to a tire comprising a tread having two edges and a center, separating the tread into two portions of equal width with sets of tread bars. Each set of tread bars has three regions: an edge region, a central region, and an intermediate region.

Therefore, it is an object of the present invention to provide a tire having sipes and blocks at different widths and inclination angles, which may be beneficial for several reasons, while avoiding the disadvantages of the uneven stiffness distribution over the axial extension of the tread as well as over the circumference of the tire.

## Summary

This object is achieved by providing an improved vehicle tire according to the independent claim 1. Further embodiments are described in the dependent claims.

According to aspects of the invention, a tire for a vehicle comprising a tread is provided. The tread comprises a set of consecutive blocks arranged along a circumference of the tire, the set of consecutive blocks comprising a first subset of blocks arranged according to a first pitch having a first pitch length. The tread further comprises a plurality of first grooves arranged over the circumference of the tire, wherein each of the plurality of first grooves is arranged between two blocks of the set of consecutive blocks. Each first block of the first subset of the set of consecutive blocks comprises a first sipe arranged in the first block, wherein the first sipe comprises a first protrusion of the first sipe starting from a bottom of the first sipe and extending radially outward.

Such a tire allows for good traction on snow-covered grounds by providing sipes which are intended to trap snow therein and provide additional edges which are intended to dig into the snow and provide traction thereon.

Additionally, a protrusion is provided at the bottom of the sipe. The protrusion is intended to locally stiffen the block at the position of the protrusion which is achieved by the provision of additional material. Advantageous positions of the protrusions can be found in the preferred embodiments. Generally, protrusions may be provided at positions which are intended to provide a hinge functionality to the block. I.e., if a block is intended to bend around a certain portion, e.g., between a first portion and a second portion, the protrusion may be provided between these two portions in order to locally stiffen the block in between the portions such that bending of the block around the protrusion is precedented. By controlling the bending behavior of the blocks, a more evenly distributed contact pressure of the blocks on the ground can be achieved, which increases the grip of the tire and at the same time reduces abrasion which benefits wear and thus durability of the tire.

Alternatively, the protrusion may be provided at a position where the block may need additional stiffening, for example, in portions of the block which are comparably narrow. In this case, the protrusion may provide stiffening in regions that structurally have lower stiffness, such as block parts having a small inclination angle with respect to the circumferential direction. This allows for an overall improved distribution of stiffness over the width of the tread, leading to a more uniform distribution of contact pressure bearing the benefits described above.

The protrusions in the narrow block portions may be especially beneficial blocks of pitches with small pitch length. In this case, the distribution of block stiffness over the entirety of the pitch can be improved, which benefits overall grip of the tire, thus providing for improved vehicle handling during breaking, accelerating and steering, especially on dry and wet grounds.

**Brief description of the Figures**

Fig. 1 shows a sketch of a vehicle tire according to the present disclosure.
Fig. 2 illustrates a half tread profile of a tire according to the present disclosure.
Figs. 3A to 3G illustrate various possible shapes of sipes according to the present disclosure.
Fig. 4 illustrates a half tread profile of a tire having multiple pitches of different pitch length according to the present disclosure.
Fig. 5 shows the inside of a first sipe according to the present disclosure.
Fig. 6 shows the inside of a second sipe according to the present disclosure.
Fig. 7 illustrates a close-up view of a block indicating possible positions of protrusions according to the present disclosure.
Fig. 8 illustrates an exemplary embodiment of a V-shaped directional tread pattern according to the present disclosure.
Fig. 9 illustrates an exemplary embodiment of an S-shaped tread pattern according to the present disclosure.
Fig. 10 illustrates a blade for forming a sipe according to the present disclosure.

**Detailed Description**

The object of the invention is achieved by providing at least one protrusion which extends from a bottom of the sipe and extends radially outwardly.

The protrusion is intended to locally stiffen the block, such that deformation of the block in response to stresses can be largely avoided. This is especially beneficial in portions where the block is not very stiff to begin with, such as block parts of narrow width, especially for pitches having narrow pitch length. By locally stiffening the block, a more even distribution of stiffness over the entirety of the tread can be achieved which has beneficial effects for tire performance.

A "pitch" can be considered as a geometrical portion of the pattern that repeats itself all over the tire circumference.

"Pitch Length", in particular, can be defined as the arc length (measured on tire circumference) between one point belonging to a pitch and its homologous, so it includes both rubber and void portions.

Thus, "pitch length" corresponds to the sum of a block width and the width of one neighboring first groove only if the widths are calculated along the tire circumference and not perpendicularly to the groove.

Moreover, since pitch length includes both rubber and void portions, an increased block width may not necessarily correspond to an increased pitch length (i.e., the block width may vary but can be compensated by void width to keep the same pitch length and vice versa).

For example, the contact pressure of the tire on the ground can be distributed more evenly if the block stiffness is distributed more evenly over the pattern. Such even distribution of contact pressure allows for improvement of overall traction of the tire on various types of grounds, as well as improvements in terms of wear performance. That is, wear energy can be distributed over the entirety of the tread more evenly, such that the tire wears more evenly. This may lead to a prolongation the life cycle of the tire.

The present disclosure further comprises beneficial ways of positioning the protrusions within a sipe. For example, it may be beneficial to provide two protrusions per sipe, such that the protrusions together with neighboring, less stiff portions can behave substantially as a hinge portion allowing for bending of the block in desired locations. For example, a protrusion may be located between a shoulder portion and an intermediate portion of the block, as well as between the intermediate portion and the central portion of a block. Additionally, for blocks of smaller pitch lengths, an additional protrusion may be provided in the narrowest portions of the block, which is usually the central portion, because this narrowest block portion generally exhibits the lowest stiffness. This selective provision of additional protrusions in blocks of the smaller pitch lengths provide for especially beneficial distribution of stiffness and thus bears particular improvements of tire traction and wear performance.

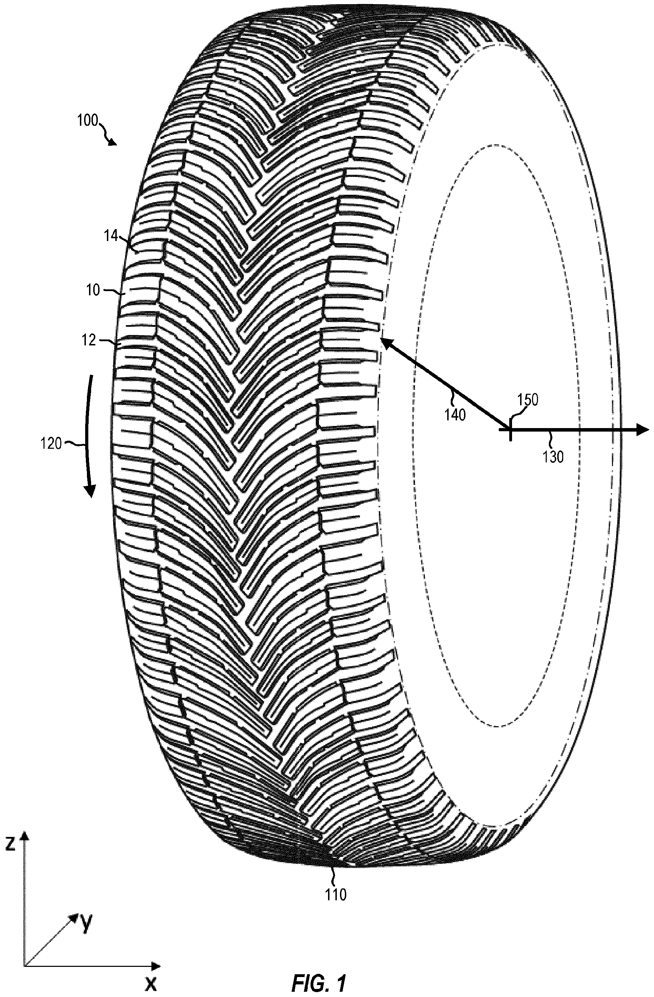

Fig. 1 shows a sketch of a vehicle tire according to the present disclosure.

According to Fig. 1, the tire 100 comprises a tread 110. The tread comprises a set of consecutive blocks 10 as well as a plurality of grooves 12, each groove 12 arranged between two blocks 10 of the set of consecutive blocks. Moreover, a sipe 14 may be arranged within each of the set of consecutive blocks 10.

The blocks may be arranged consecutively a circumferential direction 120 of the tire.

A "groove" represents an incision in the tread pattern. A width of the groove may vary, for example, the first groove may be of larger width than the second groove, or may be of equal or even smaller width. For example, the width of a groove may be at least 2 mm. The width of a single groove does not necessarily have to be constant: For example, a groove can have a wider width towards the opening of the tread pattern, and a smaller width in radial inward direction. Also, a depth of a groove may vary, and sometimes a groove may extend at full tread depth (with the full tread depth being the maximum distance between the radially outermost part of the tire to the bottom of the deepest groove, measured in radial direction), but this does not necessarily have to be the case. For example a depth of least 1 mm, preferably at least 3 mm, is considered.

A "sipe" also represents an incision in the tread pattern. Reference herein to a "sipe" means an incision within a block, rather than a "groove" that separates blocks. For example, the width of sipe may also be smaller than the width of a groove, and be for example of less than 2 mm. Just as is the case for the groove, the width of a sipe does not have to be constant, and means can be applied to allow for a wider width towards the opening of the tread pattern, and a smaller width in radial inward direction. Also, a depth of a sipe may vary, and sometimes a sipe may extend at full tread block depth, but this does not necessarily have to be the case. For example, a depth of at least 1 mm, preferably at least 20% of the depth of the first grooves, is considered.

Within the context of the present disclosure, "circumferential direction" 120 means a direction perpendicular to an axial direction 130 which is parallel to the direction in which the tire usually rolls, i.e., parallel to a tangential direction with respect to the circumference of the tire. With respect to Fig. 1, the circumferential direction 120 is thus a direction which is within a plane parallel to the yz-plane.

Within the context of the present disclosure, "axial direction" 130 means a direction parallel to the direction of an axis of a vehicle on which the tire is usually mounted. Thus, according to Fig. 1, the axial direction 130 is parallel to the x-axis and thus perpendicular to the yz-plane.

Within the context of the present disclosure, "radial direction" 140 means a direction perpendicular to the axial direction. The radial direction is parallel to a connection of a center 150 of the tire with the tread surface. Thus, the radial direction is within a plane parallel to the yz-plane and generally perpendicular to the axial direction 130 and the circumferential direction 120.

Within the context of the present disclosure, the "equatorial plane" refers to a plane which is perpendicular to the axial direction 130 and cuts the section width of the tire in two halves of equal width. Thus, the equatorial plane is parallel to the yz-plane and corresponds to the widthwise centerline of the tread.

Also, any numeral angles given herein are to be considered absolute values, i.e., not limiting to the orientation of the respective angle.

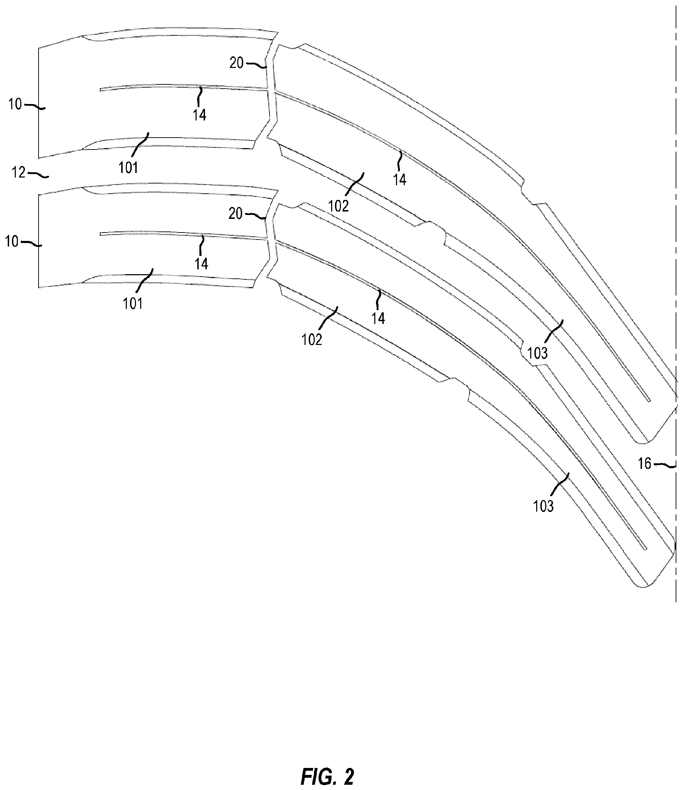

Fig. 2 illustrates a half tread profile of a tire according to the present disclosure.

According to Fig. 2, the tread of the tire comprises a set of consecutive blocks 10 arranged along a circumference of the tire. "Consecutive blocks" in within the context of this disclosure means that the tread comprises multiple blocks following one another in succession over the circumference of the tire. While it is preferred that the invention according to the present disclosure is provided for all blocks of the tire, it is possible that some blocks, which may be arranged between individual blocks 10 of the set of consecutive blocks, do not comprise sipes according to the present invention.

In some embodiments, described in more detail elsewhere herein, the tread comprises further blocks on the other side of the equatorial plane 16 of the tire. In some embodiments described elsewhere herein, these further blocks may have axisymmetric configuration with respect to the blocks 10 shown in Fig. 2, such that the overall pattern is V-Shaped. In other embodiments described elsewhere herein, the further blocks may be point-symmetric, such that the overall pattern is S-shaped. In any case, the present disclosure is not directed at a specific orientation of the blocks but can be applied to blocks of various shapes and orientations.

Moreover, while the present disclosure is described with respect to tread patterns which are generally symmetric, i.e., having same or similar tread configuration on both sides of the equatorial plane, it will be understood that the concept described herein can also be applied in asymmetric tread patterns, i.e., in patterns having substantially different tread configurations on both sides of the equatorial plane of the tire.

Generally, the blocks 10 have the purpose of providing contact to the ground when the tire is in rolling condition. The edges as well as the surfaces of the blocks are configured to provide a friction force between the tire and the ground for grip, allowing general roadholding as well as movement control of the vehicle by a driver of a vehicle by acceleration, breaking or steering.

According to Fig. 2, the tread further comprises a plurality of first grooves 12 arranged over the circumference of the tire, wherein each of the plurality of first grooves 12 is arranged between two blocks 10 of the set of consecutive blocks. Preferably, the grooves 12 start near the equatorial plane 16 of the tire and extend towards a shoulder end of the tread to open at the outer edge of the tire. The grooves 12 are generally delimited by the adjacent blocks 10.

The purpose of the grooves 12 is mainly the drainage of water from the contact patch by guiding the water along the groove 12 towards the shoulder of the tire and eject the water from there, as the tire rolls on the ground. Thus, the grooves 12 provide for improved performance of the tire, especially in wet road conditions. Further, as the grooves delimit the consecutive blocks, they also provide edges for the blocks for improved snow performance. Moreover, the grooves allow for improved wear performance, as they allow more flexibility of the tread elements, such that slippage of the blocks over the ground is reduced, leading to a decrease in the abrasion effects leading to wear.

According to Fig. 2, the tread may further comprise a plurality of second grooves 20, wherein each of the second grooves 20 may be arranged in a substantially circumferential direction. In some embodiments, each second groove 20 may be arranged as a substantially straight line, e.g., with a small inclination with respect to the circumferential direction; in other embodiments, as shown for example in Fig. 2, each second groove 20 may be arranged with a zigzag form, e.g., including three differently inclined parts. Such zigzag form of the second groove 20 allows for a partial interruption of the strain and slippage behavior of the tire, thus improving the distribution of wear energy over the axial extension of the block 10.

The second grooves may generally have the purpose of decoupling shoulder portions of the blocks 10 from the portions of the blocks 10 which are arranged axially more inwardly, i.e., closer to the equatorial plane 16 of the tire. For example, during acceleration or breaking, the shoulder portions of a blocks 10 may be especially strained because it is arranged generally perpendicularly to a circumferential direction of the tire. This may lead to deformation of the block 10 in the shoulder portions. To ensure good steering performance as well as lateral road holding also during breaking and acceleration, it is thus desirable to mechanically decouple the shoulder portions from the portions of the block 10 which are arranged axially more inwardly. This decoupling may preferably be achieved by providing a second groove 20 therebetween. This way, the portions arranged axially more inwardly still provide for lateral road holding and steering performance despite the deformation of the shoulder portions. A wider second groove improves the decoupling effect compared to a second groove of smaller width.

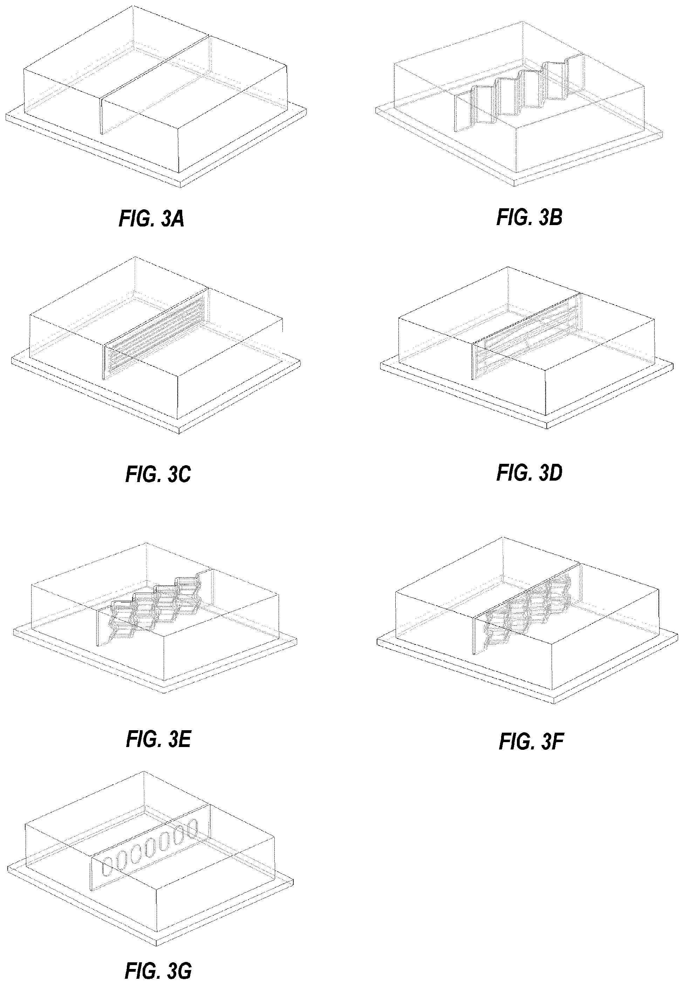

According to Fig. 2, the tread may further comprise a plurality of sipes 14. In the shown tread pattern, each of the plurality of sipes 14 may extend substantially along a shape of the block 10. However, other arrangements and shapes of the sipes on the outer tread surface are also possible, for example wavy shapes, zigzag-shapes, and the like. The sipes do not necessarily have to follow the shape of the block. For example, the sipes may only be included along a part of the shape of the block, or have a different angle of inclination than the underlying block or portion of the block with respect to the circumferential direction. Also, while some sipes may have walls extending radially towards a center of the tire, some sipes may also have wavy shapes, zigzag shapes or the like in radial direction. Moreover, such sipes may also be inclined with respect to the radial direction. Some sipes may comprise protrusions near a bottom of the sipe. Some examples of sipe shapes are described with respect to Figs. 3A to Figs. 3G.

Sipes 14 are capable of trapping snow therein and providing an additional edge of the tread. This improves traction on snow-covered grounds.

In some embodiments, the plurality of sipes 14 may define an edge ingredient (EI) corresponding to the ratio between the sum of the projected lengths of the plurality of sipes in an axial direction (SAP) and the circumference of the tread (C), such that

$$EI = \frac{\sum SAP}{C},$$

wherein the EI is at least 2 and at most 20. Preferably, the EI may be at least 2 and at most 16, more preferably at least 2 and at most 15.

The circumference C of the tire is measured at the radially outermost ring of the tire in inflated condition. For the inflation pressure and ambient temperature, the same specifications as described below for tire footprint measurements apply.

A high edge ingredient provides for better capacity for trapping snow, which improves the traction of the tire on snow-covered ground. However, a high edge ingredient also leads to a low stiffness of the blocks, which generally worsens breaking/acceleration performance on dry ground. An edge ingredient in one of the above ranges provides a particularly good tradeoff between traction on snow-covered grounds and braking/acceleration performance on dry ground.

The tire according to Fig. 2 may further have a void volume, being the volume of all grooves, sipes and recesses provided in the tread, and a volume of rubber provided in the tread, together making up the total volume of the tread. I.e., if the total volume of the tire is $V_T$, the void volume being $V_V$ and the rubber volume being $V_R$, then the total volume $V_T$ would be $V_T=V_V+V_R$. In a preferred embodiment, the ratio $V_V/V_R$ between the void volume $V_V$ and the rubber volume $V_R$ may be at least 0.20 and at most 0.40. Preferably, the ratio $V_V/V_R$ may be at least 0.24 and at most 0.37, more preferably at least 0.28 and at most 0.35. The ratio $V_V/V_R$ is directly linked to the stiffness of the tread profile. Thus, a higher ratio $V_V/V_R$ indicates a higher amount of void in the tread, which leads to lower stiffness of the tread, and thus benefits snow performance. A lower ratio $V_V/V_R$ indicates a higher amount of rubber in the tread, which leads to higher stiffness and thus increases breaking performance. A void to rubber ratio in the specified range provides optimal tradeoff between snow and dry performance, providing a tire which exhibits good breaking performance on dry ground as well as good traction on snow-covered grounds.

According to Fig. 2, the block 10 may comprise a first portion 101 arranged at a shoulder region of the tire and a second portion 102 arranged at a position axial inward to the first portion 101 of the block 10. The block 10 may further comprise a third portion 103 arranged at a position axial inward to the second portion 102 of the block 10.

Figs. 3A to 3G illustrate various possible shapes of sipes according to the present disclosure.

According to Figs. 3A, a sipe may be provided as a straight line, having two plane parallel walls. Such a sipe provides a particularly low stiffness of the block, thus increasing snow traction of the tire.

Alternatively, according to Figs. 3B, a sipe may be provided with a wavy shape, such that the opposite walls are parallel but not plane but exhibit some waves along the block surface. Such a sipe generally corresponds to the sipe of Figs. 3A but with a substantially sinusoidal shape. Thus, it exhibits higher stiffness and due to the increased amount of sipe area, there is a higher possibility of mechanical interlocking of the sipe walls during high strain, thus improving breaking performance.

Alternatively, according to Figs. 3C, a sipe may be provided with radial waves, i.e., having the waves arranged along a radial direction, with the waves having a periodical shape. This sipe shape similarly exhibits higher stiffness and due to the increased amount of sipe area, there is a higher possibility of mechanical interlocking of the sipe walls during high strain, thus improving breaking performance.

As a modification, according to Figs. 3D, the wavy shape as well as the periodicity may differ over the extension of the sipe. This sipe shape similarly exhibits higher stiffness and due to the increased amount of sipe area, there is a higher possibility of mechanical interlocking of the sipe walls during high strain, thus improving breaking performance.

Alternatively, according to Figs. 3E, a sipe may be provided having a wavy shape in two dimensions, i.e., with waves arranged along the extension of the sipe and waves along the radial direction.

Alternatively, according to Figs. 3F, a sipe may be provided which has similar shape as shown in Figs. 3E, but with the top part forming a straight line, such that the wavy shape only starts radially below the outer surface of the block.

The sipes of 3E and 3F have similar shape. As a result, the resulting stiffness of the block is increased, because a great portion of rubber area will interlock during high strains, thus contributing to higher shear stresses and in turn higher friction, which leads to increased block stiffness. In this way, dry and wet performance can be improved, while maintaining good snow performance, because the sipe still provides for a certain amount of deformability.

Yet alternatively, according to Figs. 3G, a sipe may be provided with one or more recesses, preferably in oval shape, arranged along the extension of the sipe. solution which introduces some local protrusions on one side of the sipe. In this way, the interlocking points are can be localized in specific portions of the sipe itself, allowing for improved stiffness distribution.

These are just some exemplary shapes of sipes, but additional shapes are also possible. Also, combinations of several sipe shapes are conceivable, e.g., one wall having one shape and one wall having another shape, or a shape of the sipe changing over the extension of the sipe.

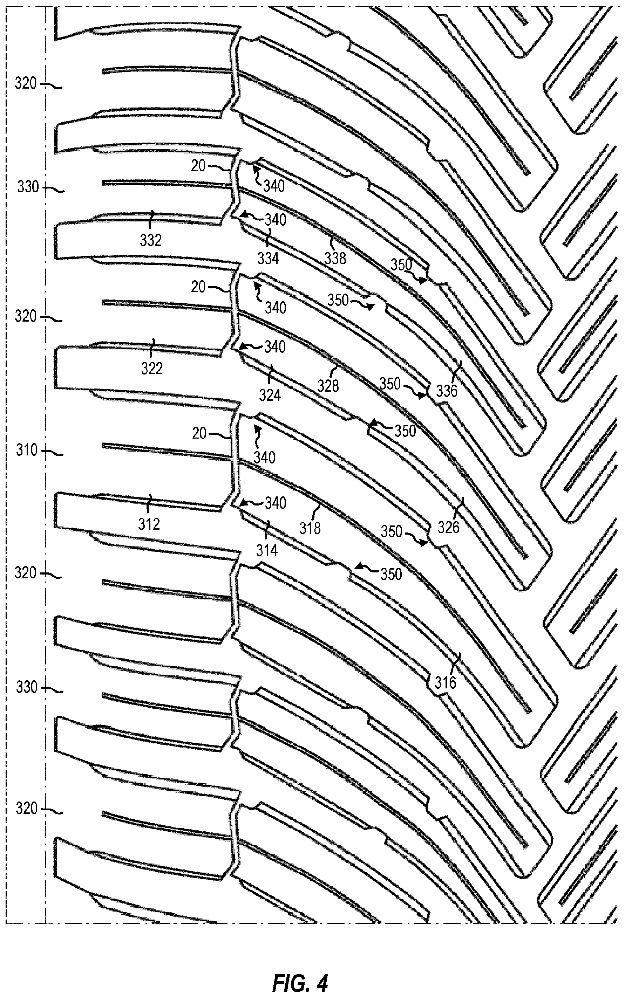

Fig. 4 illustrates a half tread profile of a tire having multiple pitches of different pitch length according to the present disclosure.

According to Fig. 4, the set of consecutive blocks 10 may comprise a first subset of blocks 310 arranged according to a first pitch having a first pitch length. Each block 310 of the first subset of blocks 310 may comprise a first portion 312 arranged at a shoulder region of the tire and a second portion 314 arranged at a position axial inward to the first portion 312 of the block 310. The block 310 may further comprise a third portion 316 arranged at a position axial inward to the second portion 314 of the block 310. Each block 310 of the first subset of blocks 310 may further comprise a first sipe 318.

According to Fig. 4, the set of consecutive blocks 10 may further comprise a second subset of blocks 320 arranged according to a second pitch having a second pitch length, the second pitch length being smaller than the first pitch length. Each block 320 of the second subset of blocks 320 may comprise a first portion 322 arranged at a shoulder region of the tire and a second portion 324 arranged at a position axial inward to the first portion 322 of the block 320. The block 320 may further comprise a third portion 326 arranged at a position axial inward to the second portion 324 of the block 320. Each block 320 of the second subset of blocks 320 may further comprise a second sipe 328.

According to Fig. 4, the set of consecutive blocks 10 may further comprise a third subset of blocks 330 arranged according to a third pitch having a third pitch length, the third pitch length being smaller than the second pitch length. Each block 330 of the third subset of blocks 330 may comprise a first portion 332 arranged at a shoulder region of the tire and a second portion 334 arranged at a position axial inward to the first portion 332 of the block 330. The block 330 may further comprise a third portion 336 arranged at a position axial inward to the second portion 334 of the block 330. Each block 330 of the third subset of blocks 330 may further comprise a third sipe 338.

In some embodiments, the first pitch length may be a greatest pitch length of the tire. In some embodiments, the tread may have only one pitch length which is the first pitch length, i.e., all blocks and related circumferential distance have a comparable extension in circumferential direction. In other embodiments, the tread may have two pitch lengths, i.e., the first pitch length and the second pitch length. The first pitch length may then be the greatest pitch length and the second pitch length may be smaller than the first pitch length. Preferably, the second pitch length may be less than or equal to 90% of the first pitch length. More than two, such as three or more pitches can also be applied.

According to Fig. 4, the third portion 316, 326, 336 of at least one of the first block 310, the second block 320 or the third block 330 may have an axial extension of at least 25% and at most 40% of a half footprint width of the tire. Thus, the third portions 316, 326, 336 preferably start adjacent to the equatorial plane 16 of the tire and extend axially outward up to a width of 25% to 40% of a half footprint width of the tire.

The second portion 314, 324, 334 of at least one of the first block 310, the second block 320 or the third block 330 may have an axial extension of at least 25% and at most 55% of a half footprint width of the tire. Thus, the second portions 314, 324, 334 preferably start at an axial outward end of the third portions 316, 326, 336 and extend axially outward up to a width of 65% to 80% of a half footprint width of the tire.

The first portion 312, 322, 332 of at least one of the first block 310, the second block 320 or the third block 330 may have an axial extension of at least 20% and at most 35% of a half footprint width of the tire. Thus, the first portions 312, 322, 332 preferably start at an axial outward end of the second portions 314, 324, 334 and extend axially outward up to an axial outward end of the tire, i.e., covering the total portion of the half footprint width axially outwards from the second portions 314, 324, 334.

In some embodiments, the separation between at least two portions of at least one of the first block or the second block may be defined by either one of:

- one or more recess in one or more edges of the block;
- a variation in inclination angle of the block to the circumferential direction of the tire;
- a direction or magnitude of curvature of the block;
- a stepwise increase or decrease in chamfer width;
- a groove extending through the block in substantially circumferential direction; or
- a combination thereof.

For example, as is illustrated in Fig. 4, recesses 350 may separate the second portion 314 of the block 310 from the third portion 316 of the block 310. Further, recesses 340 may separate the first portion 312 of the block 310 from the second portion 314 of the block 310.

Alternatively, other means of separation between the edge portions are possible. For example, as illustrated in Fig. 4, groove 20 extending through the block 310 in substantially circumferential direction may separate the first portion 312 from the second portions 314. While such a groove is only shown in Fig. 4 for separating the first portions 312, 322, 332 from the second portions 314, 324, 334, a similar groove may also be arranged between the second portions 314, 324, 334 and the third portions 316, 326, 336.

Furthermore, although in Fig. 4 only recesses 340 as well as groove 20 are shown as means for separating neighboring edge portions, other means can be utilized, such as a stepwise increase or decrease in chamfer width.

Within the context of the present disclosure, "chamfer" means an inclined side wall of a block which extends from the outer block surface radially inward. The wall is inclined such that the width of the block measured in circumferential direction increases towards the bottom of the groove. Each chamfer is defined by a height and a width. The chamfer height may correspond to the distance between the outer block surface and the radially innermost end of the inclined wall, measured in radial direction. The height of a chamfer (= distance between the outer block surface and the radially innermost end of the inclined wall) is usually lower than the total height of the block, and may for example be at most 50% or less than the total height of the block. The width of the chamfer may be measured perpendicular to the block and corresponds to the width of the inclined chamfer wall when projected onto the outer tread surface.

Alternatively, a change in direction or magnitude of curvature of the respective edge can be used, i.e., a change between concave and convex curvature, as well as an increase or decrease in curvature of the edge, can separate two neighboring edge portions.

Moreover, an inclination angle of the respective block to the circumferential direction of the tire can be used to determine a separation between block portions.

According to one approach, the inclination angle of a respective part of the block is determined by the angle between (i) a tangent applied on the trailing edge of the block and (ii) the circumferential direction of the tire. If the respective part of the block comprises a chamfer, the tangent is applied on the circumferentially outermost end of the block (so as to disregard the width and shape of the chamfer). This approach may be used if the respective portions of the block are formed continuously or nearly continuously, i.e., without any substantial circumferential incision in-between, and shows on the leading edge and the trailing edge a discontinuity, e.g., a significant change, in its inclination with respect to the circumferential direction of the tire. By connecting the two discontinuities, this block is separated into two respective portions.

Preferably, an inclination angle (i.e., the inclination angle of the tangent of one of the leading and trailing edge of the respective portion of the block with respect to the circumferential direction) of the first portions 312, 322, 332 may be at least 65° and at most 90° to the circumferential direction, preferably 75° and at most 90° to the circumferential direction, and more preferably, at least 85° and at most 90° to the circumferential direction. An inclination angle of the second portion 102 may be at least 50° and at most 65° to the circumferential direction. Preferably, the inclination angle of the second portions 314, 324, 334 may be at least 50° and at most 60° to the circumferential direction. An inclination angle of the third portions 103 may be at least 20° and at most 50° to the circumferential direction. Preferably, the inclination angle of the third portions 316, 326, 336 may be at least 30° and at most 50° to the circumferential direction.

According to another approach, which may be used if none of the leading edge and trailing edge shows any discontinuity in its inclination with respect to the circumferential direction of the tire, a separation between block portions is preferably determined according to the axial extension on the footprint width as described above in connection with Fig. 4, a recess in the respective edge, the direction or magnitude of curvature of the respective edge, a stepwise increase or decrease in chamfer width, or a groove extending through the block in substantial circumferential direction.

More preferably, in this approach, the inclination angle can also be used in addition to one or more of the afore-mentioned criteria. For example, the third portions 316, 326, 336 that start adjacent to the equatorial plane the tire and extend axially outward up to a width of 25% to 40% of a half footprint width of the tire shown, for at least one of the possible extensions in this range, an angle of inclination that may be at least 20° and at most 50° to the circumferential direction, preferably, at least 30° and at most 50° to the circumferential direction. Likewise, the second portions 314, 324, 334 that starts at an axial outward end of the third portions and extend axially outward up to a width of 65% to 80% of a half footprint width of the tire show an inclination angle of at least 50° and at most 65° to the circumferential direction, preferably, at least 50° and at most 60°. Likewise, the first portions 312, 322, 332 that starts at an axial outward end of the second portions and extend axially outward up to an axial outward end of the tire show an inclination angle of at least 65° and at most 90° to the circumferential direction, preferably 75° and at most 90° to the circumferential direction, and more preferably, at least 85° and at most 90° to the circumferential direction.

In the context of this disclosure, "leading edge", sometimes also denoted as "traction edge", refers to the edge of the block that, when a longitudinal traction force is applied to the tire reacts mostly to such force. Typically, the "leading edge" is the edge of a block which is of greater length than the lateral edges of the block, and which first encounters the ground as the block of a tire rolling in a preferred rolling direction enters the contact patch of the tire with the ground.

"Trailing edge", sometimes also denoted as "breaking edge", refers to the edge of the block that, when a longitudinal breaking force is applied to the tire reacts mostly to such force. Typically, the "trailing edge" is the edge of the block which is of greater length than the lateral edges of the block, and which is the last edge to lose contact with the ground as the block of the tire rolling in a preferred rolling direction leaves the contact patch of the tire with the ground.

Also, combinations of possible means for separating edge portions are possible. As one example, Fig. 4 shows for the separation between the first portions 312, 322, 332 and the second portions 314, 324, 334 by a combination of recesses 340 and groove 20, and there are further conceivable combinations.

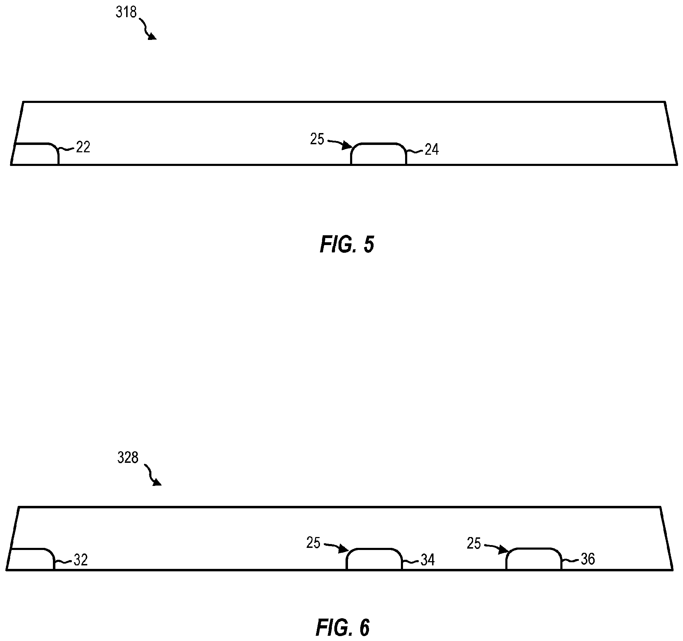

Fig. 5 shows the inside of a first sipe according to the present disclosure.,

According to Fig. 5, the first sipe 318 may comprise a first protrusion 22 starting from a bottom of the first sipe and extending radially outward. The first protrusion 22 of the first sipe 318 may be arranged between the first portion 312 of the first block 310 and the second portion 314 of the first block 310. I.e., in some embodiments, the first protrusion 22 of the first sipe 318 may be arranged adjacent to a second groove 20 extending through the block 310 in substantially circumferential direction.

In some embodiments, the first sipe 318 may comprise a second protrusion 24 starting from the bottom of the first sipe 318 and extending radially outward. The second protrusion 24 of the first sipe 318 may be located between the second portion 314 of the first block 310 and third portion 316 of the first block 310.

As described above, the first sipe 318 may preferably be arranged in a first block 310 of the first subset of blocks, i.e., in blocks with the greatest pitch length.

Moreover, as discussed above, a second block 320 of a second subset of blocks 320 may comprise a second sipe 328.

Fig. 6 shows the inside of a second sipe according to the present disclosure.

According to Fig. 6, the second sipe 328 may comprise a first protrusion 32 starting from a bottom of the second sipe 328 and extending radially outward. The first protrusion 32 of the second sipe 328 may be arranged between the first portion 322 of the second block 320 and the second portion 324 of the second block 320. I.e., in some embodiments, the first protrusion 32 of the second sipe 328 may be arranged adjacent to a second groove 20 extending through the block 320 in substantially circumferential direction.

In some embodiments, the second sipe 328 may comprise a second protrusion 34 starting from the bottom of the second sipe 328 and extending radially outward. The second protrusion 34 of the second sipe 328 may be located between the second portion 324 of the second block 320 and third portion 326 of the second block 320.

In some embodiments, the second sipe 328 may further comprise a third protrusion 36 of the second sipe 328, the third protrusion 36 of the second sipe 328 starting from the bottom of the second sipe 328 and extending radially outward. The third protrusion 36 of the second sipe 328 may be arranged in the third portion 336 of the second block 320. Preferably, the second sipe may be located substantially in the center of the third portion in an axial direction.

As described above, the second sipe 328 may preferably be arranged in a second block 320 of the second subset of blocks, i.e., in blocks with smaller pitch length than the greatest pitch length.

In case there is more than two pitch lengths, for example three or more pitch lengths, a third sipe 338 as well as further sipes may be arranged in the blocks of the further smaller pitch lengths, such as for example in the third blocks 330 of the third subset of blocks 330 as described with respect to Fig. 4. The third sipe 338 and the further sipes may correspond to the second sipe 328 as described above.

Providing the third protrusions in the third portion 326 of the second block 320 or in the third portion 336 of the third block 330 allows for additional stiffening of block in the central portion. Because this portion usually has lower width than the first and second block portions, especially for the smaller pitch lengths, i.e., the second pitch length and the third pitch length, the reinforcement of this region by means of a third protrusion is especially beneficial to the distribution of the stiffness over the tread. Thus, by means of this feature, the distribution of contact pressure over the contact patch can be improved, leading to better overall grip. The local stiffening of the third portion, i.e., the central portion, of the block also especially enhances lateral roadholding of the tire.

As is illustrated in Fig. 5 and Fig. 6, at least one of the first protrusion of the first sipe, the second protrusion of the first sipe, the first protrusion of the second sipe, the second protrusion of the second sipe or the third protrusion of the second sipe comprises at least one curved portion 25. Preferably, the at least one curved portion has a radius of at least 0.8 mm and at most 3.0 mm, preferably greater than 1.0 mm.

The curved portion allows for a more even distribution of stiffness, as the curvature of the protrusion leads to a gradual increase/decrease of stiffness over the extension of the respective protrusion. This way, the concentration of high stresses in single points of the tread can be avoided, leading to improved wear performance.

In some embodiments, at least one of the first protrusion of the first sipe, the second protrusion of the first sipe, the first protrusion of the second sipe, the second protrusion of the second sipe or the third protrusion of the second sipe may have a maximum height of at least 20% and at most 80% of a depth of the respective sipe. The protrusion height is directly linked to the increase in stiffness of the respective block portion. Having the protrusion in the mentioned range provides a good balance between local stiffening and block/sipe deformation. Greater maximum height leads to increased stiffening, thus providing improved wear performance, while lower height allows for greater bending capability of the block and sipe, increasing traction on snow. The specified range provides an improved trade-off between the two effects.

In some embodiments, at least one of the first protrusion of the first sipe, the second protrusion of the first sipe, the first protrusion of the second sipe, the second protrusion of the second sipe or the third protrusion of the second sipe may have an elongated shape along the extension of the sipe, preferably the shape of a polygon, more preferably the shape of a quadrangle or a triangle, even more preferably the shape of a rectangle. The rectangular shape allows for an improved distribution of the stiffness, as rectangular protrusions extend further along the sipe. They provide for a uniform height and thus a uniform stiffness distribution, which benefits wear performance of the tire.

In some embodiments, at least one edge of at least one of the first protrusion of the first sipe, the second protrusion of the first sipe, the first protrusion of the second sipe, the second protrusion of the second sipe or the third protrusion of the second sipe may have a curvilinear shape, preferably the shape of an arc or a spline. This allows for the avoidance of a stress concentration possibly introduced by tangent discontinuities which may be introduced by providing protrusions in polygonal shapes. This again benefits wear performance of the tire.

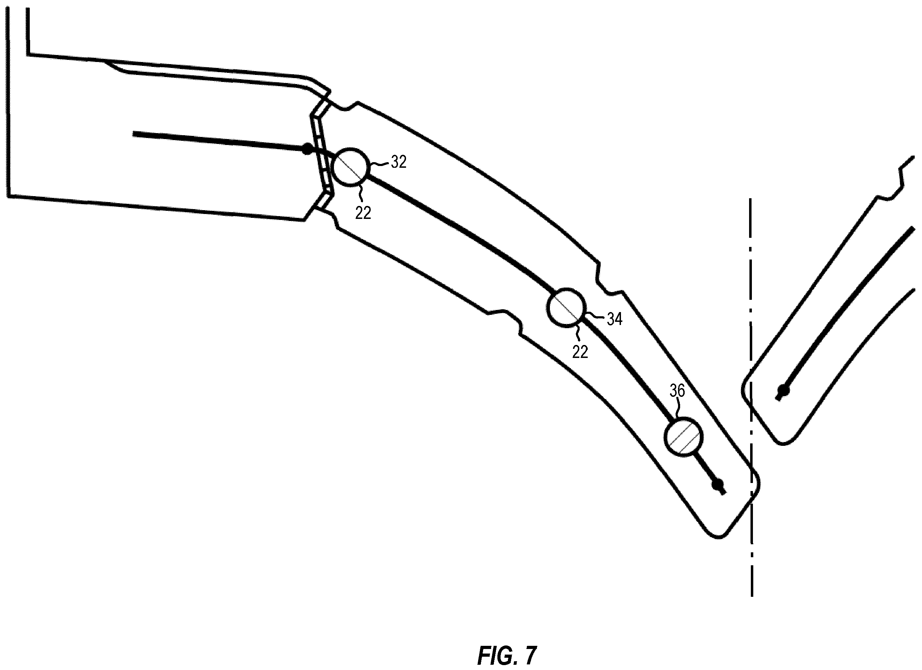

Fig. 7 illustrates a close-up view of a block indicating possible positions of protrusions according to the present disclosure.

If the block according to Fig. 6 corresponds to a first block 310 of Fig. 4, the sipe shown in Fig. 6 may correspond to a first sipe 318. Then, the sipe may comprise a first protrusion 22 between the first portion 312 and the second portion 314 of the block 310. Furthermore, the sipe may comprise a second protrusion 24 between the second portion 314 and the third portion 316 of the block 310.

If the block according to Fig. 6 corresponds to a second block 320 or a third block 330 of Fig. 4, the sipe shown in Fig. 6 may correspond to a second sipe 328. Then, the sipe may comprise a first protrusion 32 between the first portion 322 and the second portion 324 of the block 320, 330. Furthermore, the sipe may comprise a second protrusion 34 between the second portion 324 and the third portion 326 of the block 320, 330. Moreover, if the block according to Fig. 6 corresponds to a second block 320 or a third block 330 of Fig. 4, the sipe shown in Fig. 6 may further comprise a third protrusion 36 arranged in the third portion 326 of the block 320, 330.

In some embodiments, at least one of the first sipe and the second sipe may comprise at least one of:

- an axial innermost end which is closed by the block, and

- an axial outermost end which is closed by the block.

This allows for the avoidance of local stress discontinuities, especially over less stiff block portions. Such discontinuities may lead to excessive local deformation which can be avoided by providing the first sipe as defined above.

In some embodiments, a width of at least one of the first sipe and the second sipe may vary by at least 0% and at most 100% of a sipe width over the radially outermost 2 mm of the respective sipe, the sipe width being measured at a position 2 mm below the radially outermost surface. A wider sipe on the tread surface might lead to higher pressures on the edges of the sipe, which may in turn lead to higher deformation and thus reduced performance especially during dry braking as well as higher wear. This can be avoided by providing a sipe as defined above.

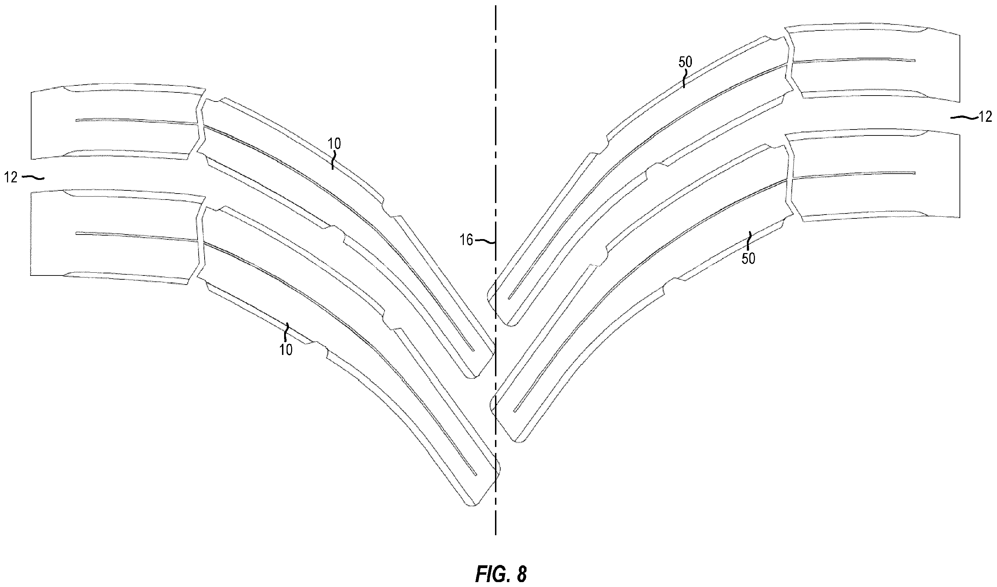

Fig. 8 illustrates an exemplary embodiment of a V-shaped directional tread pattern according to the present disclosure.

According to Fig. 8, some embodiments of the tread may comprise a second set of consecutive blocks 50, generally corresponding to the first set of consecutive blocks 10, which is arranged at an opposite side of the equatorial plane 16 of the tire. In some embodiments, as illustrated in Fig. 8, the second set of consecutive blocks 50 can be provided axisymmetric to the first set of blocks 10, leading to a V-shaped tread pattern which has a preferred rolling direction. The V shape provides the advantage of improved water drainage properties, because, when the tire rolls in the preferred rolling direction, water can be ejected from the contact patch by means of two opposite first grooves in opposite axial directions of the tread. Thus, traction on wet roads can be improved. While the directional pattern with the preferred rolling direction is advantageous for wet road surfaces, other embodiments are possible.

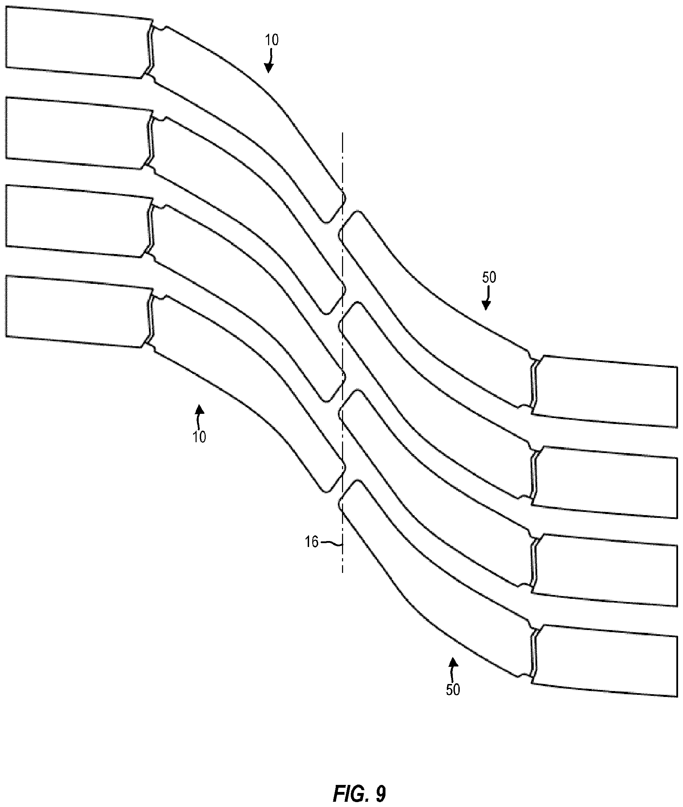

For example, Fig. 9 illustrates an exemplary embodiment of an S-shaped tread pattern according to the present disclosure. For some embodiments, according to Fig. 9, the tread may comprise a second set of consecutive blocks 50 in addition to the first set of consecutive blocks 10. The second set of consecutive blocks 50 may be arranged on an opposite side of the equatorial plane 16 of the tire. In contrast to the above-described embodiment comprising a V-shaped tread pattern, the second set of consecutive blocks 50 may be provided point-symmetric to the first set of blocks 10, leading to an S-shaped tread pattern which does not have preferred rolling direction.

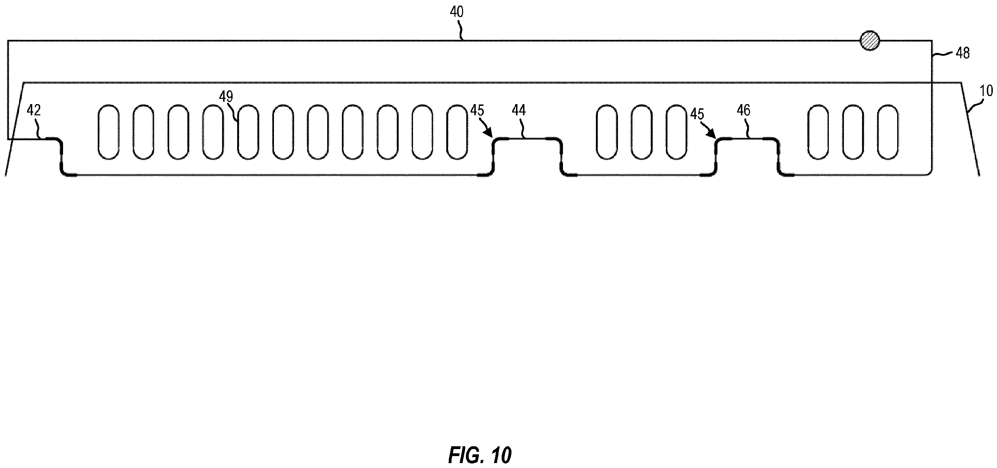

Fig. 10 illustrates a blade for forming a sipe according to the present disclosure.

According to some aspects of the invention, a mold for forming a tire may be provided. The mold may comprise a plurality of cavities for forming a set of consecutive blocks 10 arranged along a circumference of the tire 100, the set of consecutive blocks 10 comprising a first subset of blocks arranged according to a first pitch having a first pitch length. The mold may further comprise a plurality of protrusions for forming a plurality of first grooves arranged over the circumference of the tire, wherein each of the plurality of first grooves is arranged between two blocks of the set of consecutive blocks. The mold may further comprise at least one blade 40 for forming a first sipe arranged in one of the first subset of blocks, the blade comprising a first recess for forming a first protrusion of the first sipe.

Such a mold may be configured to form a tire according to any one of the above-described embodiments. Especially, the recess 42 in the blade 40 allows for forming of a protrusion in a respective portion of the sipe, thus also bearing the advantage of providing a means for forming a tire having improved wear performance and improved traction, as has been described above.

In some embodiments, the blade 40 may further comprise a second recess 44 for forming a second protrusion of the first sipe. The first protrusion of the first sipe and the second protrusion of the second sipe may be arranged between portions of the first blocks of the first subset of the set of consecutive blocks. The block portions may be defined as described above.

In some embodiments, the mold may further comprise a second plurality of cavities a second subset of blocks, arranged according to a second pitch having a second pitch length, the second pitch length being smaller than the first pitch length, preferably having a pitch length which is less than or equal to 90% of the first pitch length.

The mold may then comprise a second blade 40 for forming a second sipe arranged in one of the second subset of blocks. The second blade may comprise a first recess 42 for forming a first protrusion of the second sipe. Preferably, the second blade may further comprise a second recess 44 for forming a second protrusion of the second sipe. More preferably, the second blade may further comprise a third recess 46 for forming a third protrusion of the second sipe.

The recesses 42, 44, 46 of the blade 40 may comprise at least one curved portion 45, preferably having a radius of at least 0.8 mm and at most 3.0 mm, preferably greater than 1.0 mm. The curved portion 45 may be configured to form the curved portion 25 of one of the protrusions. At least one of the recesses 42, 44, 46 may have a maximum height of at least 20% and at most 80% of a depth of the respective sipe.

According to some embodiments, At least one of the recesses 42, 44, 46 may have an elongated shape along the extension of the sipe, preferably the shape of a polygon, more preferably the shape of a quadrangle or a triangle, even more preferably the shape of a rectangle. At least one of the recesses 42, 44, 46 may have a curvilinear shape, preferably the shape of an arc or a spline.

In some embodiments, the blade 40 may have an axial innermost end 48 which may be enclosed by the block 10. The axial innermost end 48 of the blade 40 may be spaced from the axial innermost end of the cavity forming the block 10.

For example, the blade 40 shown in Fig. 10 may further comprise recesses 49 which may be configured to form protrusions of a sipe as shown in Figs. 3G. In other embodiments, the blade may be shaped to form sipes of different shapes, for example in any one of the shapes explained with respect to Figs. 3A to Figs. 3G.

In some embodiments, the first protrusion of the second sipe and the second protrusion of the second sipe may be arranged between block portions, as described in more detail above. Preferably, the third protrusion of the second sipe may be arranged in the third portion of the second block, preferably in the center of the third portion.

Thus, the mold according to the present aspect of the invention is configured to provide a tire as defined above, which bears the same advantages and improvements.

## Tire footprint measurement

Within the context of this disclosure, a "tire footprint" means all parts of the tire that come into contact with the ground when the tire is in inflated and loaded condition. The tire footprint gives information about the behavior of a tread profile in normal condition, i.e., from the tire footprint it can be seen, which parts of the blocks come into contact with the ground under static loading conditions.

When analyzing a tire footprint, generally, the respective tire is inflated, with the pressure depending on the type of the tire. For a standard radial passenger tire with nominal section widths of 195 mm and below, a tire pressure of 1.9 bar is used. For a standard radial passenger tire with nominal section widths of 205 mm and above, a tire pressure of 2.0 bar is used. For reinforced radial passenger tires of all sizes, a pressure of 2.3 bar is used. For tires of commercial vans, trucks, etc., the standardized inflation pressure according to the European Tyre and Rim Technical Organisation (ETRTO) is used. All measurements are conducted under room ambient temperature.

The tire is then loaded at the following load conditions: For a radial passenger tire, the tire is loaded with weight corresponding to 88% of the tire load index according to ETRTO charts. Tires for commercial vans, trucks, etc. are loaded with weight corresponding to the ETRTO single load rated standard. To conduct the measurement, ink may be applied to the tread profile and the tire may then be pushed against a card according to the above specifications, leaving an ink footprint which can then be analyzed. A footprint is evaluated on three tire portions which are equally spaced by 120° over the circumference of the tire. The metrics that are analyzed in the footprint are then averaged over the three measured portions.

## Tire void volume and rubber volume measurement

The tire void volume in the context of this application is also measured in footprint condition. I.e., the tire is inflated in the same way as described above with respect to the tire footprint measurement. The void volume is measured by a laser measurement system which is capable of detecting, for each pixel, its relative depth with respect to the tread surface. By this, a total void volume in the contact patch can be calculated by integrating over all measured pixels. The total tread volume can be calculated as the product of the footprint width (FW) and the circumference (C) of the tire, multiplied with the weighed mean depths of the first grooves. The total rubber volume is then the difference between the total tread volume and the total void volume.

Measurement values given in the present disclosure refer to measurements conducted in footprint condition and on new tires, which have not been exposed to wear before the measurement.

## List of reference signs

| | |
|---|---|
| 10, 310, 320, 330 | block |
| 12 | first grooves |
| 14 | sipe |
| 16 | equatorial plane |
| 20 | second groove |
| 22, 32 | first protrusion |
| 24, 34 | second protrusion |
| 36 | third protrusion |
| 40 | blade |
| 42, 44, 46, 49 | recess of the blade |
| 100 | tire |
| 101, 312, 322, 332 | first portion |
| 102, 314, 324, 334 | second portion |
| 103, 316, 326, 336 | third portion |
| 110 | tread |
| 120 | circumferential direction |
| 130 | axial direction |
| 140 | radial direction |
| 150 | center |
| 310 | first block |
| 318 | first sipe |
| 320 | second block |
| 328 | second sipe |
| 330 | third block |
| 338 | third sipe |
| 340, 350 | recess of the block |

## Claims

1. A tire (100) for a vehicle comprising a tread (110), the tread comprising:

   a set of consecutive blocks (10) arranged along a circumference of the tire, the set of consecutive blocks comprising a first subset of blocks (310) arranged according to a first pitch having a first pitch length; and

a plurality of first grooves (12) arranged over the circumference of the tire, wherein each of the plurality of first grooves is arranged between two blocks (10) of the set of consecutive blocks; wherein each first block (310) of the first subset of the set of consecutive blocks comprises:

a first sipe (318) arranged in the first block (310), a first portion (312) of the first block (310) arranged at a shoulder region of the tire, and a second portion (314) of the first block arranged at a position axial inward to the first portion of the first block, the tire being **characterised in that** the first sipe (318) comprises a first protrusion (22) of the first sipe starting from a bottom of the first sipe (318) and extending radially outward, and the first protrusion (22) of the first sipe (318) is arranged between the first portion (312) of the first block (310) and the second portion (314) of the first block (310).

2. The tire of claim 1, wherein the first sipe further comprises a second protrusion (24) of the first sipe starting from the bottom of the first sipe and extending radially outward.

3. The tire of claim 1, wherein each first block of the first subset of blocks further comprises a third portion (316) of the first block arranged at a position axial inward to the second portion of the first block; and

wherein the first sipe further comprises a second protrusion (24) of the first sipe starting from the bottom of the first sipe and extending radially outward; wherein the second protrusion of the first sipe is located between the second portion of the first block and third portion of the first block.

4. The tire of any of the preceding claims, wherein the set of consecutive blocks further comprises:

a second subset of blocks (320), arranged according to a second pitch having a second pitch length, the second pitch length being smaller than the first pitch length; wherein each second block of the second subset of the set of consecutive blocks comprises: a second sipe (328) arranged in the second block, wherein the second sipe comprises a first protrusion (32) of the second sipe and a second protrusion (34) of the second sipe, each of the first and second protrusion of the second sipe starting from a bottom of the second sipe and extending radially outward.

5. The tire of claim 4, wherein each second block of the second subset of blocks (320) comprises a first portion (322) of the second block arranged at the shoulder region of the tire, a second portion (324) of the second block arranged at a position axial inward to the first portion, and a third portion (326) of the second block arranged at a position axial inward to the second portion of the second block;

wherein the first protrusion (32) of the second sipe is arranged between the first portion of the second block and the second portion of the second block; and wherein the second protrusion (34) of the second sipe is arranged between the second portion of the second block and the third portion of the second block.

6. The tire of claim 4 or 5, wherein the first pitch length is a greatest pitch length of the tire, and wherein the second pitch length is less than or equal to 90% of the first pitch length.

7. The tire of claim 5 or 6, wherein the second sipe further comprises a third protrusion (36) of the second sipe (328), the third protrusion of the second sipe starting from the bottom of the second sipe and extending radially outward; wherein the third protrusion of the second sipe is arranged in the third portion (326) of the second block.

8. The tire of claim 7, wherein the third protrusion (36) of the second sipe is located substantially in the center of the third portion (326) in an axial direction.

9. The tire of claim 3 or claim 5, wherein

the third portion of at least one of the first block or the second block has an axial extension of at least 25% and at most 40% of a half footprint width of the tire, the second portion of at least one of the first block or the second block has an axial extension of at least 25% and at most 55% of a half footprint width of the tire, and the first portion of at least one of the first block or the second block has an axial extension of at least 20% and at most 35% of a half footprint width of the tire.

10. The tire of any one of claim 1, claim 3, claim 5 or claim 9, wherein a separation between at least two portions of at least one of the first block or the second block is defined by either one of:

> one or more recess in one or more edges of the block;
> a variation in inclination angle of the block to the circumferential direction of the tire;
> a direction or magnitude of curvature of the block;
> a stepwise increase or decrease in chamfer width;
> a groove extending through the block in substantially circumferential direction; or

a combination thereof.

11. The tire of any one of the preceding claims, wherein at least one of the first protrusion of the first sipe, the second protrusion of the first sipe, the first protrusion of the second sipe, the second protrusion of the second sipe or the third protrusion of the second sipe comprises at least one curved portion.

12. The tire of claim 11, wherein the at least one curved portion has a radius of at least 0.8 mm and at most 3.0 mm, preferably greater than 1.0 mm.

13. The tire of any one of the preceding claims, wherein at least one of the first protrusion of the first sipe, the second protrusion of the first sipe, the first protrusion of the second sipe, the second protrusion of the second sipe or the third protrusion of the second sipe has a maximum height of at least 20% and at most 80% of a depth of the respective sipe.

14. The tire of any one of the preceding claims, wherein at least one of the first protrusion of the first sipe, the second protrusion of the first sipe, the first protrusion of the second sipe, the second protrusion of the second sipe or the third protrusion of the second sipe has an elongated shape along the extension of the sipe, preferably the shape of a polygon, more preferably the shape of a quadrangle or a triangle, even more preferably the shape of a rectangle.

15. The tire of any one of claims 1 to 13, wherein at least one edge of at least one of the first protrusion of the first sipe, the second protrusion of the first sipe, the first protrusion of the second sipe, the second protrusion of the second sipe or the third protrusion of the second sipe has a curvilinear shape, preferably the shape of an arc or a spline.

16. The tire of any one of the preceding claims, wherein at least one of the first sipe and the second sipe comprises at least one of:

> an axial innermost end which is closed by the block, and

> an axial outermost end which is closed by the block.

17. The tire of any one of the preceding claims, wherein a width of at least one of the first sipe and the second sipe varies by at least 0% and at most 100% of a sipe width over the radially outermost 2 mm of the respective sipe, the sipe width being measured at a position 2 mm below the radially outermost surface.

18. A mold for forming a tire, the mold comprising a plurality of cavities for forming a set of consecutive blocks arranged along a circumference of the tire, the set of consecutive blocks comprising a first subset of blocks arranged according to a first pitch having a first pitch length, wherein each first block of the first subset of blocks comprises a first portion arranged at a shoulder region of the tire and a second portion arranged at a position axial inward to the first portion; wherein
the mold further comprises:

> - a plurality of protrusions for forming a plurality of first grooves arranged over the circumference of the tire, wherein each of the plurality of first grooves is arranged between two blocks of the set of consecutive blocks;
> - at least one blade for forming a first sipe arranged in one of the first subset of blocks,
> - the blade comprising a first recess for forming a first protrusion of the first sipe, the recess being arranged between the first portion and the second portion.

**Patentansprüche**

1. Reifen (100) für ein Fahrzeug, umfassend eine Lauffläche, die Lauffläche (110) umfassend:

> einen Satz von aufeinanderfolgenden Blöcken (10), die entlang eines Umfangs des Reifens angeordnet sind, wobei der Satz von aufeinanderfolgenden Blöcken einen ersten Teilsatz von Blöcken (310) umfasst, die gemäß einer ersten Teilung angeordnet sind, die ein erste Teilungslänge aufweist; und
> eine Vielzahl von ersten Rillen (12), die über den Umfang des Reifens hinweg angeordnet sind, wobei jede der Vielzahl von ersten Rillen zwischen zwei Blöcken (10) des Satzes von aufeinanderfolgenden Blöcken angeordnet ist;
> wobei jeder erste Block (310) des ersten Teilsatzes des Satzes von aufeinanderfolgenden Blöcken umfasst:

> > eine erste Lamelle (318), die in dem ersten Block (310) angeordnet ist, wobei ein erster Abschnitt (312) des ersten Blocks (310) in einem Schulterbereich des Reifens angeordnet ist und ein zweiter Abschnitt (314) des ersten Blocks an einer Position axial nach innen zu dem ersten Abschnitt des ersten Blocks angeordnet ist,

wobei der Reifen **dadurch gekennzeichnet ist, dass**

die erste Lamelle (318) einen ersten Vorsprung (22) der ersten Lamelle umfasst, der von einem Boden der ersten Lamelle (318) ausgeht und sich radial nach außen erstreckt, und

der erste Vorsprung (22) der ersten Lamelle (318) zwischen dem ersten Abschnitt (312) des ersten Blocks (310) und dem zweiten Abschnitt (314) des ersten Blocks (310) angeordnet ist.

2. Reifen nach Anspruch 1, wobei die erste Lamelle ferner einen zweiten Vorsprung (24) der ersten Lamelle umfasst, der von dem Boden der ersten Lamelle ausgeht und sich radial nach außen erstreckt.

3. Reifen nach Anspruch 1, wobei jeder erste Block des ersten Teilsatzes von Blöcken ferner einen dritten Abschnitt (316) des ersten Blocks umfasst, der an einer Position axial nach innen zu dem zweiten Abschnitt des ersten Blocks angeordnet ist; und

wobei die erste Lamelle ferner einen zweiten Vorsprung (24) der ersten Lamelle umfasst, der von dem Boden der ersten Lamelle ausgeht und sich radial nach außen erstreckt;

wobei sich der zweite Vorsprung der ersten Lamelle zwischen dem zweiten Abschnitt des ersten Blocks und dem dritten Abschnitt des ersten Blocks befindet.

4. Reifen nach einem der vorstehenden Ansprüche, wobei der Satz von aufeinanderfolgenden Blöcken ferner umfasst:

einen zweiten Teilsatz von Blöcken (320), die gemäß einer zweiten Teilung angeordnet sind, die eine zweite Teilungslänge aufweist, wobei die zweite Teilungslänge kleiner als die erste Teilungslänge ist;

wobei jeder zweite Block des zweiten Teilsatzes des Satzes von aufeinanderfolgenden Blöcken umfasst:

eine zweite Lamelle (328), die in dem zweiten Block angeordnet ist, wobei die zweite Lamelle einen ersten Vorsprung (32) der zweiten Lamelle und einen zweiten Vorsprung (34) der zweiten Lamelle umfasst, wobei jeder des ersten und des zweiten Vorsprungs der zweiten Lamelle von einem Boden der zweiten Lamelle ausgeht und sich radial nach außen erstreckt.

5. Reifen nach Anspruch 4, wobei jeder zweite Block des zweiten Teilsatzes von Blöcken (320) einen ersten Abschnitt (322) des zweiten Blocks, der in dem Schulterbereich des Reifens angeordnet ist, einen zweiten Abschnitt (324) des zweiten Blocks, der an einer Position axial nach innen zu dem ersten Abschnitt angeordnet ist, und einen dritten Abschnitt (326) des zweiten Blocks umfasst, der an einer Position axial nach innen zu dem zweiten Abschnitt des zweiten Blocks angeordnet ist;

wobei der erste Vorsprung (32) der zweiten Lamelle zwischen dem ersten Abschnitt des zweiten Blocks und dem zweiten Abschnitt des zweiten Blocks angeordnet ist; und

wobei der zweite Vorsprung (34) der zweiten Lamelle zwischen dem zweiten Abschnitt des zweiten Blocks und dem dritten Abschnitt des zweiten Blocks angeordnet ist.

6. Reifen nach Anspruch 4 oder 5, wobei die erste Teilungslänge eine größte Teilungslänge des Reifens ist, und wobei die zweite Teilungslänge kleiner als oder gleich 90 % der ersten Teilungslänge ist.

7. Reifen nach Anspruch 5 oder 6, wobei die zweite Lamelle ferner einen dritten Vorsprung (36) der zweiten Lamelle (328) umfasst, wobei der dritte Vorsprung der zweiten Lamelle von dem Boden der zweiten Lamelle ausgeht und sich radial nach außen erstreckt;

wobei der dritte Vorsprung der zweiten Lamelle in dem dritten Abschnitt (326) des zweiten Blocks angeordnet ist.

8. Reifen nach Anspruch 7, wobei der dritte Vorsprung (36) der zweiten Lamelle im Wesentlichen in der Mitte des dritten Abschnitts (326) in einer axialen Richtung angeordnet ist.

9. Reifen nach Anspruch 3 oder 5, wobei

der dritte Abschnitt mindestens eines des ersten Blocks oder des zweiten Blocks eine axiale Erstreckung von mindestens 25 % und höchstens 40 % einer halben Aufstandsflächenbreite des Reifens aufweist,

der zweite Abschnitt mindestens eines des ersten Blocks oder des zweiten Blocks eine axiale Erstreckung von mindestens 25 % und höchstens 55 % einer halben Aufstandsflächenbreite des Reifens aufweist, und

der erste Abschnitt mindestens eines des ersten Blocks oder des zweiten Blocks eine axiale Erstreckung von mindestens 20 % und höchstens 35 % einer halben Aufstandsflächenbreite des Reifens aufweist.

10. Reifen nach einem der Ansprüche 1, 3, 5 oder 9, wobei eine Trennung zwischen mindestens zwei Abschnitten von mindestens einem des ersten Blocks oder des zweiten Blocks definiert ist durch entweder:

eine oder mehrere Aussparungen in einer oder mehreren Kanten des Blocks;
eine Variation eines Neigungswinkels der jeweiligen Kante zu der Umfangsrichtung des Reifens;
eine Richtung oder Größe einer Krümmung des Blocks;
eine stufenweise erfolgende Zunahme oder Abnahme der Fasenbreite;
eine Rille, die sich durch den Block in im Wesentlichen in Umfangsrichtung erstreckt;
oder
eine Kombination davon.

11. Reifen nach einem der vorstehenden Ansprüche, wobei mindestens einer von dem ersten Vorsprung der ersten Lamelle, dem zweiten Vorsprung der ersten Lamelle, dem ersten Vorsprung der zweiten Lamelle, dem zweiten Vorsprung der zweiten Lamelle oder dem dritten Vorsprung der zweiten Lamelle mindestens einen gekrümmten Abschnitt umfasst.

12. Reifen nach Anspruch 11, wobei der mindestens eine gekrümmte Abschnitt einen Radius von mindestens 0,8 mm und höchstens 3,0 mm aufweist, vorzugsweise größer als 1,0 mm.

13. Reifen nach einem der vorstehenden Ansprüche, wobei mindestens einer von dem ersten Vorsprung der ersten Lamelle, dem zweiten Vorsprung der ersten Lamelle, dem ersten Vorsprung der zweiten Lamelle, dem zweiten Vorsprung der zweiten Lamelle oder dem dritten Vorsprung der zweiten Lamelle eine maximale Höhe von mindestens 20 % und höchstens 80 % einer Tiefe der jeweiligen Lamelle aufweist.

14. Reifen nach einem der vorstehenden Ansprüche, wobei mindestens einer von dem ersten Vorsprung der ersten Lamelle, dem zweiten Vorsprung der ersten Lamelle, dem ersten Vorsprung der zweiten Lamelle, dem zweiten Vorsprung der zweiten Lamelle oder dem dritten Vorsprung der zweiten Lamelle eine längliche Gestalt entlang der Erstreckung der Lamelle aufweist, vorzugsweise die Gestalt eines Polygons, mehr bevorzugt die Form eines Vierecks oder eines Dreiecks, noch mehr bevorzugt die Form eines Rechtecks.

15. Reifen nach einem der Ansprüche 1 bis 13, wobei mindestens eine Kante von mindestens einem des ersten Vorsprungs der ersten Lamelle, des zweiten Vorsprungs der ersten Lamelle, des ersten Vorsprungs der zweiten Lamelle, des zweiten Vorsprungs der zweiten Lamelle oder des dritten Vorsprungs der zweiten Lamelle eine krummlinige Gestalt aufweist, vorzugsweise die Gestalt eines Bogens oder einer Spline.

16. Reifen nach einem der vorstehenden Ansprüche, wobei mindestens eine der ersten Lamelle und der zweiten Lamelle mindestens eines umfasst von:

einem axialen innersten Ende, das durch den Block verschlossen ist, und
einem axialen äußersten Ende, das durch den Block verschlossen ist.

17. Reifen nach einem der vorstehenden Ansprüche, wobei eine Breite von mindestens einer der ersten Lamelle und der zweiten Lamelle um mindestens 0 % und höchstens 100 % einer Lamellenbreite über die radial äußersten 2 mm der jeweiligen Lamelle variiert, wobei die Lamellenbreite an einer Position 2 mm unterhalb der radial äußersten Oberfläche gemessen wird.

18. Form zum Ausbilden eines Reifens, die Form umfassend eine Vielzahl von Hohlräumen zum Ausbilden eines Satzes von aufeinanderfolgenden Blöcken, die entlang eines Umfangs des Reifens angeordnet sind, der Satz von aufeinanderfolgenden Blöcken umfassend einen ersten Teilsatz von Blöcken, die gemäß einer ersten Teilung angeordnet sind, die eine erste Teilungslänge aufweist, wobei jeder erste Block des ersten Teilsatzes von Blöcken einen ersten Abschnitt, der an einem Schulterbereich des Reifens angeordnet ist, und einen zweiten Abschnitt umfasst, der an einer Position axial nach innen zu dem ersten Abschnitt angeordnet ist; wobei die Form ferner umfasst:

- eine Vielzahl von Vorsprüngen zum Ausbilden einer Vielzahl von ersten Rillen, die über den Umfang des Reifens hinweg angeordnet sind, wobei jede der Vielzahl von ersten Rillen zwischen zwei Blöcken des Satzes von aufeinanderfolgenden Blöcken angeordnet ist;
- mindestens eine Klinge zum Ausbilden einer ersten Lamelle, die in einem des ersten Teilsatzes von Blöcken angeordnet ist,
- die Klinge umfassend eine erste Vertiefung zum Ausbilden eines ersten Vorsprungs der ersten Lamelle, wobei die Aussparung zwischen dem ersten Abschnitt und dem zweiten Abschnitt angeordnet ist.

## Revendications

1. Pneu (100) pour un véhicule comprenant une bande de roulement (110), la bande de roulement comprenant :

   un ensemble de blocs consécutifs (10) agencés le long d'une circonférence du pneu, l'ensemble de blocs consécutifs comprenant un premier sous-ensemble de blocs (310) agencés selon un premier pas ayant une première longueur de pas ; et
   une pluralité de premières rainures (12) agencées sur la circonférence du pneu, dans lequel chacune de la pluralité de premières rainures est agencée entre deux blocs (10) de l'ensemble de blocs consécutifs ;
   dans lequel chaque premier bloc (310) du premier sous-ensemble de l'ensemble de blocs consécutifs comprend :

      une première lamelle (318) agencée dans le premier bloc (310), une première partie (312) du premier bloc (310) agencée au niveau d'une région d'épaulement du pneu, et une deuxième partie (314) du premier bloc agencée au niveau d'une position axiale vers l'intérieur par rapport à la première partie du premier bloc,
      le pneu étant **caractérisé en ce que**
      la première lamelle (318) comprend une première saillie (22) de la première lamelle partant d'une partie inférieure de la première lamelle (318) et s'étendant radialement vers l'extérieur, et
      la première saillie (22) de la première lamelle (318) est agencée entre la première partie (312) du premier bloc (310) et la deuxième partie (314) du premier bloc (310).

2. Pneu selon la revendication 1, dans lequel la première lamelle comprend en outre une deuxième saillie (24) de la première lamelle partant de la partie inférieure de la première lamelle et s'étendant radialement vers l'extérieur.

3. Pneu selon la revendication 1, dans lequel chaque premier bloc du premier sous-ensemble de blocs comprend en outre une troisième partie (316) du premier bloc agencée au niveau d'une position axiale vers l'intérieur par rapport à la deuxième partie du premier bloc ; et

   dans lequel la première lamelle comprend en outre une deuxième saillie (24) de la première lamelle partant de la partie inférieure de la première lamelle et s'étendant radialement vers l'extérieur ;
dans lequel la deuxième saillie de la première lamelle est située entre la deuxième partie du premier bloc et la troisième partie du premier bloc.

4. Pneu selon l'une quelconque des revendications précédentes, dans lequel l'ensemble de blocs consécutifs comprend en outre :

   un second sous-ensemble de blocs (320), agencé selon un second pas ayant une seconde longueur de pas, la seconde longueur de pas étant inférieure à la première longueur de pas ;
   dans lequel chaque second bloc du second sous-ensemble de l'ensemble de blocs consécutifs comprend :
   une seconde lamelle (328) agencée dans le second bloc, dans lequel la seconde lamelle comprend une première saillie (32) de la seconde lamelle et une deuxième saillie (34) de la seconde lamelle, chacune de la première et de la deuxième saillie de la seconde lamelle partant d'une partie inférieure de la seconde lamelle et s'étendant radialement vers l'extérieur.

5. Pneu selon la revendication 4, dans lequel chaque second bloc du second sous-ensemble de blocs (320) comprend une première partie (322) du second bloc agencée au niveau de la région d'épaulement du pneu, une deuxième partie (324) du second bloc agencée au niveau d'une position axiale vers l'intérieur par rapport à la première partie, et une troisième partie (326) du second bloc agencée au niveau d'une position axiale vers l'intérieur par rapport à la deuxième partie du second bloc ;

   dans lequel la première saillie (32) de la seconde lamelle est agencée entre la première partie du second bloc et la deuxième partie du second bloc ; et
   dans lequel la deuxième saillie (34) de la seconde lamelle est agencée entre la deuxième partie du second bloc et la troisième partie du second bloc.

6. Pneu selon la revendication 4 ou 5, dans lequel la première longueur de pas est la plus grande longueur de pas du pneu, et dans lequel la seconde longueur de pas est inférieure ou égale à 90 % de la première longueur de pas.

7. Pneu selon la revendication 5 ou 6, dans lequel la seconde lamelle comprend en outre une troisième saillie (36) de la seconde lamelle (328), la troisième saillie de la seconde lamelle partant de la partie inférieure de la seconde lamelle et s'étendant radialement vers l'extérieur ;
dans lequel la troisième saillie de la seconde lamelle est agencée dans la troisième partie (326) du second bloc.

8. Pneu selon la revendication 7, dans lequel la troisième saillie (36) de la seconde lamelle est située sensiblement au centre de la troisième partie (326) dans une direction axiale.

9. Pneu selon la revendication 3 ou la revendication 5, dans lequel

   la troisième partie d'au moins l'un du premier bloc ou du second bloc a une extension axiale d'au moins 25 % et d'au plus 40 % d'une demi-largeur d'empreinte du pneu,
   la deuxième partie d'au moins l'un du premier bloc ou du second bloc a une extension axiale d'au moins 25 % et d'au plus 55 % d'une demi-largeur d'empreinte du pneu, et
   la première partie d'au moins l'un du premier bloc ou du second bloc a une extension axiale d'au moins 20 % et d'au plus 35 % d'une demi-largeur d'empreinte du pneu.

10. Pneu selon l'une quelconque de la revendication 1, de la revendication 3, de la revendication 5 ou de la revendication 9, dans lequel une séparation entre au moins deux parties d'au moins l'un du premier bloc ou du second bloc est définie par l'un ou l'autre parmi :

    un ou plusieurs évidements dans un ou plusieurs bords du bloc ;
    une variation d'angle d'inclinaison du bloc par rapport à la direction circonférentielle du pneu ;
    une direction ou une amplitude de courbure du bloc ;
    une augmentation ou une diminution par étapes de la largeur de chanfrein ;
    une rainure s'étendant à travers le bloc dans une direction sensiblement circonférentielle ;
    ou
    une combinaison de ceux-ci.

11. Pneu selon l'une quelconque des revendications précédentes, dans lequel au moins l'une parmi la première saillie de la première lamelle, la deuxième saillie de la première lamelle, la première saillie de la seconde lamelle, la deuxième saillie de la seconde lamelle ou la troisième saillie de la seconde lamelle comprend au moins une partie incurvée.

12. Pneu selon la revendication 11, dans lequel l'au moins une partie incurvée a un rayon d'au moins 0,8 mm et d'au plus 3,0 mm, de préférence supérieur à 1,0 mm.

13. Pneu selon l'une quelconque des revendications précédentes, dans lequel au moins l'une parmi la première saillie de la première lamelle, la deuxième saillie de la première lamelle, la première saillie de la seconde lamelle, la deuxième saillie de la seconde lamelle ou la troisième saillie de la seconde lamelle a une hauteur maximale d'au moins 20 % et d'au plus 80 % d'une profondeur de la lamelle respective.

14. Pneu selon l'une quelconque des revendications précédentes, dans lequel au moins l'une parmi la première saillie de la première lamelle, la deuxième saillie de la première lamelle, la première saillie de la seconde lamelle, la deuxième saillie de la seconde lamelle ou la troisième saillie de la seconde lamelle a une forme allongée le long de l'extension de la lamelle, de préférence la forme d'un polygone, plus préférablement la forme d'un quadrilatère ou d'un triangle, encore plus préférablement la forme d'un rectangle.

15. Pneu selon l'une quelconque des revendications 1 à 13, dans lequel au moins un bord d'au moins l'une parmi la première saillie de la première lamelle, la deuxième saillie de la première lamelle, la première saillie de la seconde lamelle, la deuxième saillie de la seconde lamelle ou la troisième saillie de la seconde lamelle a une forme curviligne, de préférence la forme d'un arc ou d'une cannelure.

16. Pneu selon l'une quelconque des revendications précédentes, dans lequel au moins l'une de la première lamelle et de la seconde lamelle comprend au moins l'une de :

    une extrémité axiale la plus interne qui est fermée par le bloc, et
    une extrémité axiale la plus externe qui est fermée par le bloc.

17. Pneu selon l'une quelconque des revendications précédentes, dans lequel une largeur d'au moins l'une de la première lamelle et de la seconde lamelle varie d'au moins 0 % et d'au plus 100 % d'une largeur de lamelle sur les 2 mm radialement les plus externes de la lamelle respective, la largeur de lamelle étant mesurée au niveau d'une position à 2 mm au-dessous de la surface radialement la plus externe.

18. Moule destiné à former un pneu, le moule comprenant une pluralité de cavités destinées à former un ensemble de blocs consécutifs agencés le long d'une circonférence du pneu, l'ensemble de blocs consécutifs comprenant un premier sous-ensemble de blocs agencés selon un premier pas ayant une première longueur de pas, dans lequel chaque premier bloc du premier sous-ensemble de blocs comprend une première partie agencée au niveau d'une région d'épaulement du pneu et une deuxième partie agencée au niveau d'une position axiale vers l'intérieur de la première partie ; dans lequel le moule comprend en outre :

- une pluralité de saillies destinées à former une pluralité de premières rainures agencées sur la circonférence du pneu, dans lequel chacune de la pluralité de premières rainures est agencée entre deux blocs de l'ensemble de blocs consécutifs ;
- au moins une lame destinée à former une première lamelle agencée dans l'un du premier sous-ensemble de blocs,
- la lame comprenant un premier évidement destiné à former une première saillie de la première lamelle, l'évidement étant agencé entre la première partie et la deuxième partie.

*FIG. 1*

**FIG. 2**

FIG. 3A

FIG. 3B

FIG. 3C

FIG. 3D

FIG. 3E

FIG. 3F

FIG. 3G

**FIG. 4**

318

22    25    24

**FIG. 5**

328

32    25    34    25    36

**FIG. 6**

*FIG. 7*

FIG. 8

EP 4 438 339 B1

**FIG. 9**

*FIG. 10*

EP 4 438 339 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190255890 A1
- US 20170136830 A1
- US 10967684 B2
- WO 2021089964 A1